# DEMANDE DE BREVET EUROPEEN

(11) **EP 1 408 224 A1**
(43) Date de publication de la demande: **14.04.2004**
(21) Numéro de dépôt: 02022669.2
(22) Date de dépôt: 10.10.2002
(51) Int. Cl.: F02G 5/02, F02B 33/32, F02B 37/04

(54) **Moteur à piston combiné à un cycle de Joule**

(71) Demandeur: Antoine, Hubert, 4130 Esneux (BE)
(72) Inventeur: Antoine, Hubert, 4130 Esneux (BE)

(57) **Abrégé**

Une turbomachine (10,11) utilise la chaleur des gaz d'échappement d'un moteur à piston (18) comme source chaude, via un échangeur de chaleur (7).

Cette turbomachine entraîne un compresseur d'air (9) qui suralimente le moteur à piston. La puissance de la turbomachine est transférée pneumatiquement au moteur à piston, par le travail effectué par la pression de l'air sortant du compresseur sur la surface du piston (5).

## Description

L'invention concerne un cycle thermique de moteur à piston dont la chaleur des gaz d'échappement est utilisée dans un cycle de Joule.

Les moteurs thermiques à piston rejettent une partie non négligeable de l'énergie reçue du carburant sous forme de chaleur des gaz d'échappement. Ceci représente environ 30 % de l'énergie reçue et les gaz sont à température suffisante pour servir de source chaude à un cycle thermique complémentaire au cycle du moteur à piston : on obtient alors un cycle combiné, de rendement supérieur au cycle simple de moteur à piston.
La présente invention concerne un cycle combiné où le cycle complémentaire est un cycle de Joule ouvert. Ce cycle est celui d'une turbomachine aspirant l'air ambiant et le comprimant ; l'air comprimé est ensuite échauffé dans un échangeur de chaleur avec les gaz d'échappement du moteur à piston, cet air est ensuite détendu dans une turbine où il effectue un travail moteur. L'avantage de ce cycle est de générer de la puissance à partir de la chaleur des gaz d'échappement et donc de relever le rendement du moteur à piston.
La principale difficulté de cet arrangement tient à la vitesse de rotation de la turbomachine. En effet, pour optimiser le rendement de ce cycle, il convient de minimiser la création d'entropie dans l'échangeur, et donc de faire passer dans le cycle de Joule un débit massique environ égal à celui des gaz d'échappement du moteur à piston. A ces débits massiques, la turbomachine doit tourner à une vitesse largement supérieure à celle du moteur à piston, pour avoir un rendement acceptable.

L'invention a pour but de coupler les deux cycles cad de transférer la puissance motrice du cycle de Joule à l'arbre moteur du moteur à piston.

Conformément à l'invention, ce but est atteint en entraînant un compresseur par la turbomachine fonctionnant sous le cycle de Joule combiné. Ce compresseur comprime l'air envoyé au moteur à piston.
Le piston reçoit donc, lors de sa course d'admission d'air, une poussée supplémentaire due à cette pression, cette poussée produit un travail supplémentaire fourni à l'arbre moteur du moteur à piston. L'invention permet de transférer la puissance motrice du cycle de Joule au moteur à piston sans avoir recours à une liaison mécanique entre les arbres de ces deux machines ; il s'agit d'un couplage pneumatique.

Un autre avantage de l'invention est de pouvoir suralimenter le moteur, par l'augmentation de la densité de l'air résultante de sa compression dans le compresseur actionné par le cycle de Joule. Cette suralimentation est possible à des degrés divers, en agissant sur le point de fermeture de la soupape d'admission ; si ce point est placé avant le point mort bas du piston, une détente aura lieu jusqu'au point mort bas en réduisant la densité et la température de l'air au point mort bas.

Il est possible d'installer cette turbomachine sur le même arbre que celui d'un turbocompresseur classique, les vitesses sont comparables et le démarrage du cycle de Joule est facilité.

Le couplage pneumatique est ici illustré sur un cycle à 4 temps, mais peut se réaliser sur un cycle à 2 temps également, en agissant sur la face du piston recevant l'air d'admission. De même, ce couplage pneumatique peut s'exercer sur un ou plusieurs pistons auxiliaires, mus par l'arbre du moteur à piston.

L'invention est décrite ci-après à l'aide d'exemples avec référence aux dessins ci-joints, dans lesquels :
La figure 1 est une vue schématique du cycle combiné.
La figure 2 est une vue schématique d'une variante de ce cycle, avec moteur suralimenté.
La figure 3 une vue schématique de ce cycle combiné où le turbo compresseur et la turbomachine du cycle de Joule sont intégrés.
La figure 4 une vue schématique de ce cycle combiné où le compresseur de la turbomachine du cycle de Joule et le compresseur entraîné sont intégrés.

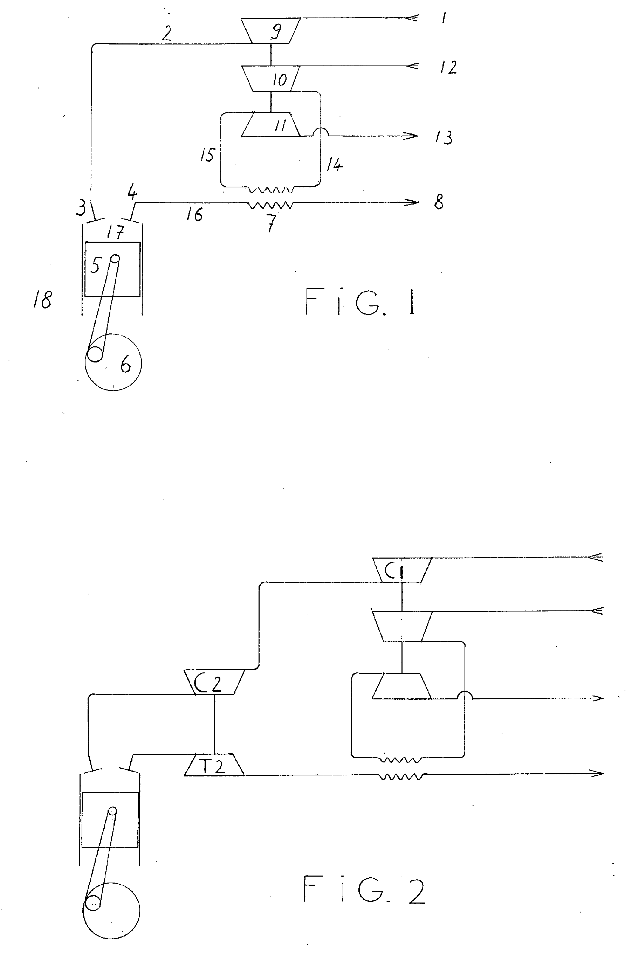

La figure 1 illustre le cycle de la façon suivante : l'air du cycle moteur à piston est prélevé de l'atmosphère 1, et comprimé par le compresseur 9 dans l'état de pression et de température 2. L'air est ensuite admis dans le cylindre 17 du moteur, par l'ouverture de la soupape d'admission 3 et le mouvement descendant du piston 5, relié par l'équipage mobile 6 à l'arbre moteur.
Après combustion et détente, les gaz chauds sont évacués par l'ouverture de la soupape d'échappement 4 dans l'état de pression et de température 16.
Les gaz chauds passent ensuite dans l'échangeur de chaleur 7 et sont évacués à l'atmosphère en 8.

Dans le cycle de Joule, l'air ambiant 12 est comprimé par le compresseur 10 dans l'état de pression et température 14, envoyé dans l'échangeur de chaleur 7 où il est réchauffé par les gaz d'échappement, dans l'état 15 . L'air se détend ensuite dans le turbine 11 et est relaché à l'atmosphère en 13.
Le travail de la turbine 11 est utilisé, en tout ou en partie, pour actionner les compresseurs 9 et 10 ; le travail fourni au compresseur 9 est le travail utile du cycle de Joule, ce travail est transféré au moteur à piston par l'action de la pression 2 sur le piston 5.

La figure 2 illustre une variante de ce cycle, où le moteur à piston est muni d'un turbocompresseur C2-T2. Ce cas se ramène à celui de la figure 1 si on considère l'ensemble moteur à piston et turbocompresseur comme un tout. On peut noter que le compresseur C1 peut être placé en aval du compresseur C2 au lieu d'en amont comme représenté en figure 2, ceci permet de conserver le turbocompresseur d'origine.

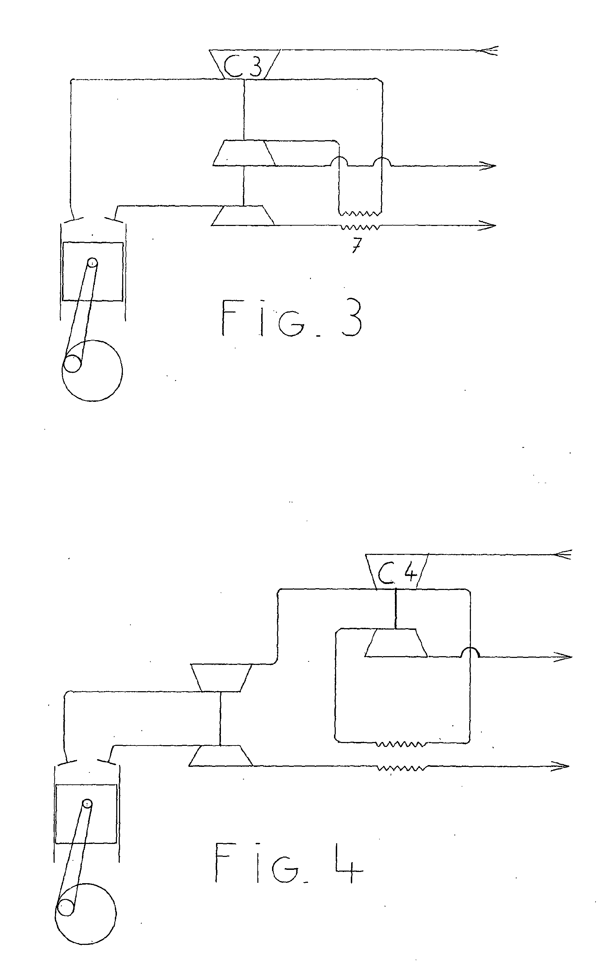

La figure 3 représente une variante où un seul compresseur C3 alimente les deux cycles et où une turbine de détente refroidit les gaz d'échappement avant leur passage dans l'échangeur 7, et contribue, avec la turbine du cycle de Joule à entraîner le compresseur commun C3.

La figure 4 représente une variante de la figure 2 avec un compresseur commun C4 pour alimenter le cycle de Joule et le moteur. On peut noter que cette variante à compresseur commun peut aussi s'appliquer sur les compresseurs 9 et 10 de la figure 1.

## Revendications

1. Cycle combiné d'un moteur à piston 18 et d'une turbine à gaz, où la source chaude du cycle moteur de la turbine à gaz est un échangeur de chaleur 7 placé sur l'échappement des gaz chauds du moteur à piston, et où le travail utile de la turbine à gaz sert à entraîner un compresseur 9 qui alimente le moteur à piston en air sous pression.

2. Cycle combiné selon la revendication 1 où le moteur à piston est muni d'un turbocompresseur dont le compresseur est soit en amont, soit en aval, soit intégré à celui de la turbine à gaz.

3. Cycle combiné selon les revendications 1 ou 2 où le compresseur 9 alimente un ou plusieurs pistons auxiliaires montés sur l'arbre du moteur à piston.
